# EUROPEAN PATENT SPECIFICATION

(11) **EP 4 335 962 B1**
(45) Date of publication and mention of the grant of the patent: **18.03.2026**
(21) Application number: 24154846.0
(22) Date of filing: 05.11.2021
(51) Int. Cl.: F16L 5/14, F24F 1/00, F16L 59/12, F24F 7/10, F24F 13/24, F16L 5/02, E04G 15/06, E01B 1/00

(54) **LEADTHROUGH KIT AND METHOD OF LEADING VENTILATION CHANNELS THROUGH A STRUCTURE**
DURCHFÜHRUNGSKIT UND VERFAHREN ZUR DURCHFÜHRUNG VON LÜFTUNGSKANÄLEN DURCH EINE STRUKTUR
KIT DE TRAVERSÉE ET PROCÉDÉ DE TRAVERSÉE DE CANAUX DE VENTILATION À TRAVERS UNE STRUCTURE

(30) Priority: 10.11.2020 FI 20206134
(43) Date of publication of application: 13.03.2024
(62) Divisional of application: 21206716.9
(73) Proprietor: VILPE Oy, 65610 Mustasaari (FI)
(72) Inventor: LAHTI, Veli-Pekka, 65610 Mustasaari (FI); SAIKKONEN, Eero, 65610 Mustasaari (FI); ANTTILA, Timo, 65610 Mustasaari (FI)
(74) Representative: Laine IP Oy

(56) References cited:
- EP-A1- 1 628 058
- EP-B1- 3 061 890
- DE-B3- 102013 210 798
- US-B2- 8 833 014

## Description

### TECHNICAL FIELD

The present invention relates to construction technology. The invention is especially related to insulated ventilation duct pass throughs through structures, such as walls. In more detail the invention relates to a leadthrough kit.

### BACKGROUND

A number of solutions for arranging ventilation duct pass throughs through structures, such as walls, are previously known. Conventionally, the pass through ducts of ventilation ducts are moulded into a sandwich-type wall element already at the element factory or, in wooden houses, they are installed at the building site. The installation of two parallel ducts through the outer wall of a building can sometimes be quite challenging, because advantageously the ducts extend at a relatively accurate distance from each other. On the other hand, the ventilation ducts should be sufficiently insulated to avoid thermal bridges or channels directing condensation into the building or inside the wall.

Publication FI 12416 U1 discloses a pass through piece comprising a rectangular insulation part, integrally formed around one or two ventilation ducts. When the insulation and ventilation ducts form a uniform piece, the mutual position and insulation of the ducts are ensured.

Publication EP 1628058 A1 discloses a sealing device for conduit lead-throughs, such as cables, pipes and the like in passages, particularly at bulkheads and decks of ships, comprising wholly or partially elastic fitting pieces as sealing modules disposed in a frame in a modular arrangement above and/or adjacent to each other, and an adjustable clamping device by means of which a pressure acting in the frame plane can be adjusted and the separate modules with the received conduits are held in a sealing manner in the frame. The sealing modules disposed to receive conduits have lead-through openings that can be adapted to the diameter of the conduits. The lead-through opening of each module to receive conduits comprises several elastic lips in the form of pointed elements as support, which lie sealingly against the inserted conduit by means of the compressive forces acting on the modules. The lips in the form of pointed elements have a central line showing an angle in relation to the inserted conduit.

There remains, however, the need to facilitate the installation of ventilation ducts to a wall element being moulded or otherwise manufactured or to ready outer walls.

### SUMMARY

The present disclosure involves a novel leadthrough kit, comprising an insulation adapter comprising a first duct, a second duct and heat insulation material. The insulation adapter is rectangular in shape and it contains a first through hole for receiving a first duct and a second through hole for receiving a second duct parallel with the first duct. The depth of the first and the second duct can be adjusted in relation to the insulation adapter during installation and locking by means of locking devices.

On the other hand the disclosure involves a novel method of providing a pass through of ventilation ducts into a receiving structure by means of a such leadthrough kit. In the method, the depth of the first and second duct in the insulation adapter is adjusted and locked by means of fasteners to correspond with the receiving structure.

The invention is characterized by what is disclosed in the independent claims.

The numerous embodiments of the invention can comprise one or more features from the following list:
- the leadthrough kit comprises at least one fastener arranged to connect to the first and second duct for locking the axial position or depth thereof in relation to the insulation adapter in at least one axial direction,
- each of the first and second ducts comprises a number of fastening parts arranged outside the body of the duct and along thereof,
- the at least one fastener comprises a counterpart of the fastening part, arranged to connect with the fastening part,
- the fastening parts are protrusions extending from an otherwise essentially cylindrical tube,
- the counterpart of the fastening part is arranged to form an interlocking joint with the fastening part,
- the fastener is arranged to be installed around the first or second duct,
- the insulation adapter comprises a first end,
- the insulation adapter comprises a second end, located at a distance from the first end, the distance defining the thickness of the insulation adapter,
- the insulation adapter comprises a four-sided cowl connecting the first and second end,
- the first and second through-hole pass though the insulation adapter so that the through-holes are inclined in relation to at least one side of the cowl,
- when installed, the central axes of the first and the second duct form an angle in relation to the projection of at least one side of the insulation adapter,
- the angle is of the order of 1 to 5 degrees,
- the angle is of the order of 2 to 4 degrees,
- the angle is about 2 degrees,
- the first and the second duct are ventilation ducts,
- the receiving structure is a wall structure,
- the wall structure comprises an outer structure layer and an inner structure layer,
- the wall structure comprises an insulation layer between the outer structure layer and the inner structure layer,
- the depth of the first and second duct in the insulation adapter is adjusted so that the distance between the end flange and the insulation adapter corresponds with the depth of the outer structure layer,
- the insulation adapter is installed so that is inclined towards the outer surface of the receiving structure.

Considerable advantages are achieved with the present solution. Because the axial position of the ducts in relation to the insulation adapter can be adjusted, the leadthrough kit can be customized for the insulation thickness of each construction site, thus facilitating installation. On the other hand, the adjustable installation kit allows the use of one size or at least a smaller number of pass through sizes in production, improving the quality of construction, as a leadthrough kit suitable for general use is more probably suitable for the construction site than a pass though kit of a specific size, especially when considering the tolerances of the building. This is, however, conducive to reducing waste, which in turn reduces the environmental load caused by construction work.

### BRIEF DESCRIPTION OF DRAWINGS

In the following, some embodiments of the invention are disclosed in more detail by means of reference to the appended drawings, in which:
- FIGURE 1: is a perspective view of leadthrough kit according to at least one embodiment,
- FIGURE 2: is an exploded view of the leadthrough kit of FIGURE 1, and
- FIGURE 3: is a cross-sectional view of the leadthrough kit of FIGURE 1,
- FIGURE 4: is a cross-sectional view of the leadthrough kit of FIGURE 1 installed in a sandwich concrete wall, and
- FIGURE 5: is a cross-sectional view of the leadthrough kit of FIGURE 1 installed in a brick-clad timber wall.

### EMBODIMENTS

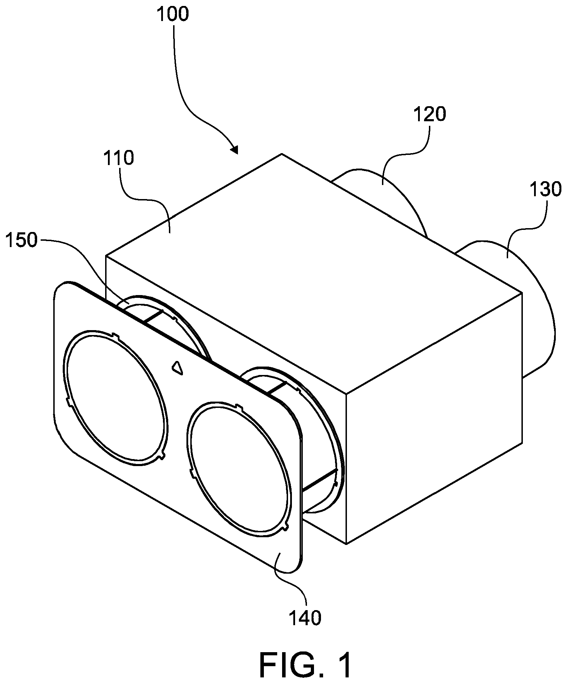

FIGURE 1 shows a loose leadthrough kit 100 according to one embodiment in assembled condition. The leadthrough kit 100 comprises an insulation adapter 110, a first duct 120 and a second duct 130 passing therethrough as well as an end flange 140 and fasteners 150. The purpose of the leadthrough kit 100 is to facilitate the installation of a ventilation valve by providing an accurately formed pass through to the wall of a building being constructed or other receiving structure that ensures the mutual location of the ventilation ducts so that the receiving structure is thermally efficient at the location of the pass through as well.

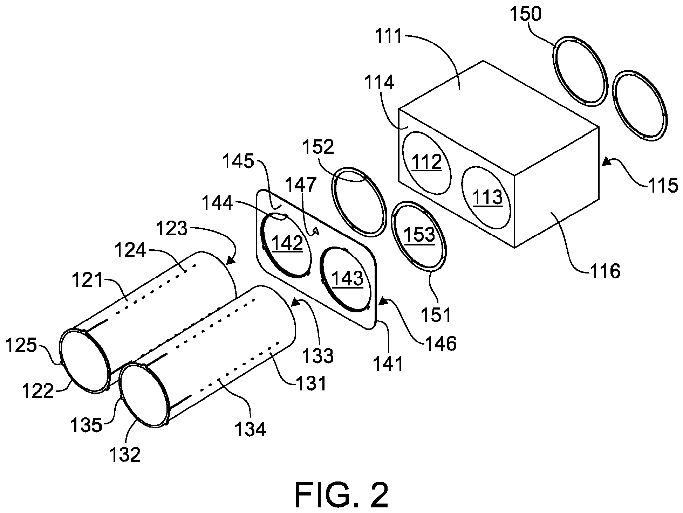

FIGURE 2 illustrates the leadthrough kit of FIGURE 1 as an exploded view showing in detail the details of the main components and their mutual relations. The insulation adapter 110 is generally in the shape of a rectangular piece formed and dimensioned for installation into the insulation layer of the receiving structure. The body 111 of the insulation adapter 110 is made of or it comprises thermal insulation material, such as EPS, styrofoam, polyurethane, closed cell foam or other insulation material. The body 111 can be one that maintains its shape. Alternatively the insulation adapter 110 can comprise an enclosure maintaining its shape (not shown in drawings), containing insulation that does not maintain its shape, such as mineral wool or blown wool. As has been mentioned, the external shape of the insulation adapter 110 is generally rectangular, which means that it has a first, planar end 114, a second, planar end 115 opposite the first end 114 and a cowl 116 connecting the ends 114, 115 and comprising four circularly arranged faces, each essentially perpendicular in relation to the preceding one. The insulation adapter 110 shown in the figures comprises sharp edges, but the edges between the faces can also comprise relief, such as a rounding or a facet (not shown in the figures). The distance between the first and second end 114, 115 defines the thickness of the insulation adapter 110. The length of the faces of the cowl 116 defines the width and height of the insulation adapter 110.

The body 111 contains two parallel through holes, the first through hole 112 and the second through hole 113. The through holes 112, 113 are arranged to receive the first and second duct 120, 130, correspondingly. Because of this the through holes 112, 113 are dimensioned, shaped and aligned so that they, on one hand, correspond to the internal ventilation ducts in the receiving structure or to be connected thereto (not shown in the figures) and, on the other hand, to the ducts of an external ventilation valve located in the receiving structure or connectable thereto (not shown in the figures). The body 111 of the insulation adapter 110 can consist of one piece, as shown in the figures, or it can consist of many interconnected parts (not shown in the figures). The insulation adapter can, for example, comprise a first body part enclosing the first through hole, and a second body part enclosing the second through hole, as well as a connection interface, such as a dovetail groove and its counterpart, by means of which the parts can be assembled into a body. The body parts can alternatively be connected by means of a band or other fastening means. Alternatively or additionally the insulation adapter can comprise more than two through holes, such as three or four through holes or more through holes for receiving a number of ventilation ducts, cables or other objects.

The first and second duct 120, 130 forming a part of the leadthrough kit 100 are ducts, especially ventilation ducts, separate from the insulation adapter 110 and fastenable thereto. It is, however, advantageous that the diameter of the ducts 120, 130 correspond with the usual ventilation duct dimensions of the industry, such as 125mm or 160mm. The ducts 120, 130 are attached to the insulation adapter 110 so that they can also be removed from the insulation adapter 110 without breaking the ducts 120, 130 or the insulation adapter 110. The first and second ducts 120, 130 don't form a unified object with the insulation adapter. The removable fastening of the ducts 120, 130 to the insulation adapter 110 can be carried out e.g.by means of fasteners 150, external in relation to the insulation adapter, that are connected to the ducts 120, 130 near the first and second ends 114, 115 of the insulation adapter. The purpose of the fastener 150 is to lock the depth of the ducts 120, 130, i.e. their axial position in relation to the insulation adapter 110 in at least one direction. A special connection interface can be provided between the ducts 120, 130 and the fasteners 150, as shown in the figures. The outer surface of the body 121, 131 of the ducts 120, 130 can be provided with a number of fastening parts 124, 134, such as protrusions or indentations. In the example of FIGURE 2 the fastening parts 124, 134 are protrusions arranged successively in the longitudinal direction of the duct 120, 130. In more detail, the fastening parts 124, 134 are arranged in four lines, each separated by a quarter of a turn from the other when seen along the circumference of the duct. Alternatively, the fastening parts could form less or more than four lines. The fastener 150 is, correspondingly, a part installed around the duct and comprising a counterpart 152 connecting with the fastening part 124, 134. In more detail, the number of the counterparts 152 of the fastening parts is four, arranged one quarter of a turn from each other seen in the direction of the circumference of the fastener 150. In the example of FIGURE 2 the counterpart 152 of the fastening part is a groove over which the fastening part 124, 134 can travel, when the fastener 150 is threaded around the duct 120, 130. Having traversed in an angular position over the fastening part 124, 134 and when encountering the insulation adapter 110, the fastener 150 can be rotated in relation to the duct 120, 130, whereby the fastener 150 remains between the fastening part 124, 134 and the first and second ends 114, 115 of the insulation adapter 110.

Alternatively the removable fastening can comprise a fastener external in relation to an insulation adapter 110 different from that above, such as a band like a cable tie (not shown in the figures), tensioned around the duct 120, 130 and preventing its axial movement in relation to the insulation adapter 110. Alternatively, the removable fastening can comprise a connection interface towards the insulation adapter 110, such as thread adapter (not shown in the figures). The outer surface of the body 121, 131 of the ducts 120, 130 can, for example, be provided with cutting threads, cutting into the body 111 of the insulation adapter 110 in the region of the first and second opening 112, 113. Alternatively the thread adapter can comprise a ready thread in the body 111 of the insulation adapter 110 in the region of the first and second opening 112, 113.

According to an alternative embodiment the means for locking the depth of the ducts 120, 130 in relation to the insulation adapter 110 can be carried out by making the insulation adapter 110 of two parts assembled around the ducts 120, 130 so that the fastening parts 124, 134 extending from the outer surface of the ducts 120, 130 are connected to the walls of the through holes 112, 113 of the insulation adapter 110. The fastening parts 124, 134 can be arranged as shown in the figures, or in another formation, such as a simple line. It is therefore preferable that the insulation adapter 110 be formed of a material elastic enough to allow the fastening parts 124, 134 to bite into the material of the insulation adapter 110 for locking the depth position. The parts of the insulation adapter, such as halves, can comprise interlocking joint that is closed by connecting the parts against each other.

The ducts 120, 130 can also comprise an end flange 140 for facilitating the installation of the leadthrough kit 100 into the receiving structure, such as the outer wall of a building or an element thereof or a mould for manufacturing the receiving structure. The end flange 140 comprises a relatively thin frame 141, the shape of which generally corresponds with the first end 141 of the body 111 of the insulation adapter 110. The frame 141 of the end 140 comprises two openings, namely the first opening 142 for receiving the first duct 120 and the second opening 143 for receiving the second duct 130. The shape, dimensioning and/or location of the openings 142, 143 of the end flange 140 correspond with the through holes 112, 113 of the insulation adapter 110. The end flange 140 connects with the first end 122, 133 of the ducts 120, 130. Preferably the connection is formed via a connection interface inseparably integrated into the ducts 120, 130 and the end flange 140, whereby the connection can be carried out without special tools or additional fastenings. In the example of FIGURE 2 the connection interface comprises male counterparts in the ducts 120, 130 and corresponding female counterparts in the end flange 140. The orientation of the counterparts can naturally also be inverse. In the above-described embodiment the first end 122, 132 of the duct 120, 130 comprises stops 125, 135 extending from the outer surface of the body 121, 131. There can be one or more stops 125, 135, such as e.g. three stops 125, 135, at a distance of one third of a turn from each other when seen along the circumference of the duct 120, 130. The stops 125, 135 can operate as a kind of a flange with opening at the first end 122, 132 of the duct 120, 130. The end flange 140, on the other hand, comprises the corresponding receiving counterparts 144 of the stop arranged around the openings 142, 143. The counterparts 144 of the stop can be realized as simple indentations on the surface of the frame 141. The connection can be carried out by pushing ducts 120, 130 through the openings 142, 143 of the end flange 140 until the stops 125, 135 connect with the counterparts 144 of the stops and prevent the ducts 120, 130 from fully travelling through the end flange 140.

Preferably the end flange 140 comprises at least one marking for aligning the leadthrough kit 100 on the receiving structure. FIGURE 2 shows an example of a marking 147 indicating the centreline of the end flange 140 and thereby also of the leadthrough kit 100. Additionally or alternatively the end flange can comprise markings (not shown in the figures) indicating the centreline of the openings 142, 143 and thus also that of the ducts 120, 130.

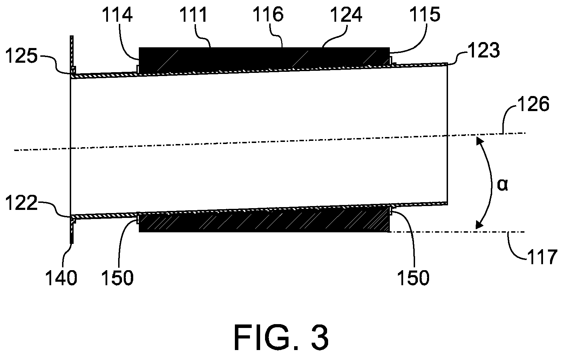

FIGURE 3 shows the cross-section of the assembled leadthrough kit 100 at the first duct 120. The cross-section would look similar at the second duct 130 as well. As can be seen, the duct 120 passes through the insulation adapter 110 so that a space remains between the end flange 140 and the first end 114 of the insulation adapter 110 for the first layer of the receiving structure. On the other hand, the second end 133 of the duct 120 extends to a distance from the second end 115 of the insulation adapter 110, whereby a space remains on the other side of the insulation adapter 110 for the second layer of the receiving structure. FIGURE 3 also shows how the fasteners 150 are supported by the first and second end 114, 115 of the insulation adapter 110 as they fasten the duct 120 to the body 111 of the insulation adapter 110. FIGURE 3 also discloses how the through hole of the insulation adapter 110 is manufactured in a inclined angle. In other words, the through hole 112 is angled in relation to the side of the cowl 116. FIGURE 3 shows the angle formed between the centre axis 126 of the duct 120 and the projection 117 of the side of the insulation adapter. Preferably the angle α is of the order of 1 to 5 degrees, especially 2 to 4 degrees, more preferably about 2 degrees. The purpose of the inclination is to cause any condensate or leakage water to flow away from the building. Thus the inclination is formed to direct the flow towards the outside of the receiving building.

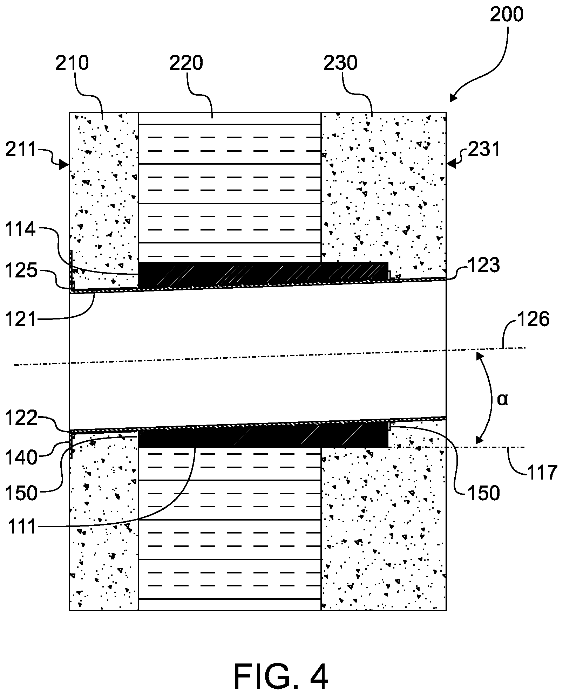

FIGURE 4 shows an assembly according to FIGURE 3 installed in the receiving wall structure 200, which is an exterior concrete sandwich wall. The wall structure 200 comprises an outer structure layer 210 made of concrete, an inner structure layer 230, also made of concrete, and between the structure layers 210, 230 an insulation layer 230 comprising a number of superimposed insulation boards, such as EPS boards. The leadthrough kit 100 is dimensioned and installed so that the space remaining between the end flange 140 and the insulation adapter 110 corresponds with the outer structure layer 210, that the first end 114 of the insulation adapter 110 is located on the same level with the interface of the outer structure layer 210 and the insulation layer 220 and that the length of the duct 120 corresponds with the thickness of the wall structure 200. In the example of FIGURE 4 the end flange 140 is located on the outer surface of the outer structure layer 210 onto which the ventilation valve is to be installed.

The leadthrough kit 100 can be installed into, for example, a moulded wall element according to FIGURE 4 already at the moulding stage. In case the length of the ducts 120, 130 is longer than the thickness of the receiving wall structure 200, the ducts 120, 130 and the insulation adapter 110 can be sawn to the correct length prior to installation. During sawing the insulation adapter 110 can first be moved to the correct distance from the end flange 140 and locked temporarily in place with fasteners 150. Subsequent to this, the excess amount of the ducts 120, 130 and possibly the insulation adapter 110 can be sawn away by means of, for example, band saw. Subsequent to this the insulation adapter 110 is removed from the ducts, after which the installation can continue.

First the ducts 120, 130 are connected to the end flange 140 as described above. The partial assembly comprising the end flange 140 and the ducts 120, 130 is positioned at the bottom of the mould utilizing the marking on the end flange or the markings 147. Thereby the first side 145 of the end flange 140 is flush with the outer surface 211 of the structure layer 210. The ducts 120, 130 stay easily upright at the bottom of the mould, stabilized by the end flange 140. The ducts 120, 130 can also be supported by the reinforcing steel. When the partial assembly is positioned at the correct place in the mould, the first layer is moulded around the partial assembly. The first pouring can be preceded or followed by installation of the insulation adapter 110 around the ducts as well as the locking of the relative axial position of the insulation adapter 110 and the ducts 120, 130 by means of fasteners 150. After the first pour the insulation layer 220 is installed over the outer structure layer 210 by means of e.g. stacking. Due the rectangular external shape of the insulation adapter 110 the insulation boards can be later sawn, if necessary, to the correct shape by sawing along straight lines. When the insulation layer is in place, the reinforcing steel and grip are installed for the inner structure layer 230. During the second pour the concrete is formed around the ducts 120, 130 in the region of the second end 123, 133 thereof. Due to the already inclined through holes 112, 113 the ducts 120, 130 are installed in correct angle so that the ducts 120, 130 are inclined outwards, towards the outer structure layer 210.

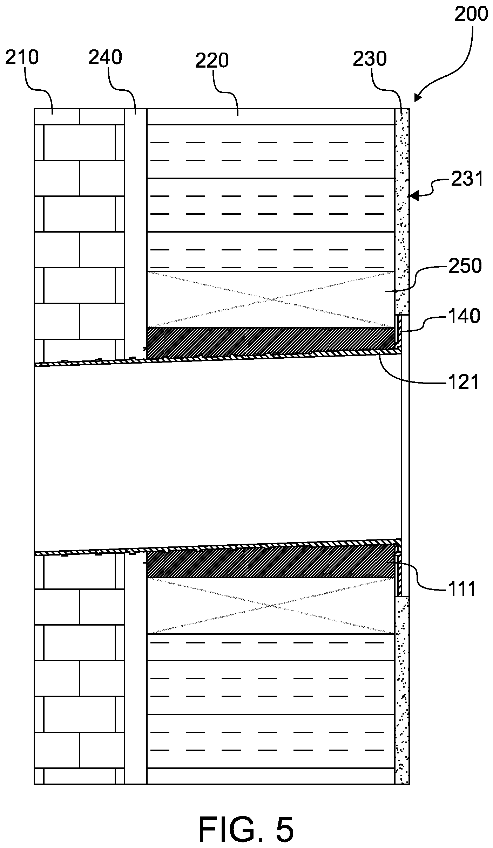

FIGURE 5 shows an assembly according to FIGURE 3 installed in a receiving wall structure 200 which is a brick-clad exterior timber-frame wall. The wall structure 200 comprises an outer structure layer 210, e.g. laid brick, an inner structure layer 230 that can be drywall board, and an insulation layer 220 between the structure layers 210, 230 that can consist of stacked insulation boards, such as EPS boards, as well as the internal studs 250 of the insulation layer 220. A ventilation space 240 is left between the outer structure layer 210 and the insulation layer 220. The cross-sectional view of FIGURE 5 is taken from a place of the wall structure 200 where the frame timbers of the wall structure 200 are not visible. The leadthrough kit 100 is dimensioned and installed so that the thickness of the insulation adapter 110 corresponds with the thickness of the insulation layer 220 and the total thickness of the leadthrough kit 100 corresponds with the total thickness of the wall structure 200. Due to the four-sided external shape of the end flange 140 the inner structure layer 230 can easily be sawn, if necessary, to the correct shape by sawing straight lines.

The leadthrough kit 100 can be installed into, for example, the wall structure of FIGURE 5 during the manufacturing stage of the wall 200 or the element forming a part thereof. In the first stage the frame of the wall or wall element is constructed of the frame timbers, the frame containing the studs 250 for receiving the leadthrough kit 100. An insulation layer 220 is installed inside the frame and enclosed with wind barrier boards (not shown in FIGURE 5) and drywall boards 230. An opening is made into the drywall board 230 for the leadthrough kit 100 by means of e.g. sawing with a drywall saw or cutting with a knife. Due the rectangular shape of the pass through adapter 110 the opening can easily be produced by sawing or cutting straight lines. Next, the thickness of the leadthrough kit 100 can be fitted to correspond with the thickness of the wall structure 200, as has been described above in connection with the method of installation in a concrete wall. The assembled installation kit 100 is pushed into the enclosure formed by the studs 250 until the insulation adapter 110 is in contact with the wind barrier board, whereby the insulation adapter 110 is aligned with the insulation layer 220. In the example of FIGURE 5 the end flange 140 is positioned at the internal surface 231 of the inner structure layer 230 so that the leadthrough kit 100 can be fastened onto the wall structure 200 by, for example, fastening the end flange 140 onto the studs 250 with screws. Finally, the outer structure layer 210 is laid around the ducts 120, 130 either directly or by using a special additional adapter (not shown in FIGURE 5). The additional adapter can comprise a four-sided frame receiving and framing the ducts 120, 130 in a way similar to the end flange 140.

**REFERENCE NUMBER LIST**

| **Number** | **Feature** | **Number** | **Feature** |
|---|---|---|---|
| 100 | leadthrough kit | 140 | end flange |
| 110 | insulation adapter | 141 | frame |
| 111 | body | 142 | first opening |
| 112 | first through hole | 143 | second opening |
| 113 | second through hole | 144 | counterpart of a stop |
| 114 | first end | 145 | first side |
| 115 | second end | 146 | second side |
| 116 | cowl | 147 | marking |
| 117 | projection of the exterior surface of the cowl | 150 | fastening |
| 120 | first duct | 151 | body |
| 121 | body | 152 | counterpart of the fastening part |
| 122 | first end | 153 | through hole |
| 123 | second end | 200 | wall structure |
| 124 | fastening part | 210 | outer structure layer |
| 125 | stop | 211 | outer surface |
| 126 | centre axis | 220 | insulation layer |
| 130 | second duct | 230 | inner structure layer |
| 131 | body | 231 | inner surface |
| 132 | first end | 240 | ventilation space |
| 133 | second end | 250 | studding |
| 134 | fastening part | α | angle |
| 135 | stop | | |

## Claims

1. A leadthrough kit (100), comprising:
- a first duct (120), which comprises an end (122) provided with a stop (125),
- a second duct (130), which comprises an end (132) provided with a stop (135),
- an insulation adapter (110) comprising thermal insulation material and having a shape of a rectangular prism and comprising:
o a first through hole (112) for receiving the first duct (120) and
o a second through hole (113) for receiving the second duct (130) parallel with the first duct (120),
wherein the first and the second duct (120, 130) can be movably assembled in relation to the insulation adapter (110) for adjusting the depth of the first and second duct (120, 130) in relation to the insulation adapter (110),
- locking means for locking the depth of the first and second duct (120, 130) in relation to the insulation adapter (110), and
- an end flange (140) being arranged to connect with the ends (122, 133) of the first and second duct (120, 130) and to align the ends (122, 133) with respect to each other, which end flange (140) comprises a first opening (142) for receiving the first duct (120) and a second opening (143) for receiving the second duct (130) as well as a counterpart (144) of the stop in connection with both openings (142, 143) for connecting to the corresponding stop (125, 135) for locking the axial position of the first and second duct (120, 130) in relation to the end flange (140) in at least one axial direction.

2. A leadthrough kit (100) according to claim 1, wherein the leadthrough kit (100) comprises at least one fastener (150) as the said locking means, the fastener being arranged to connect with the first or second duct (120, 130) for locking their axial position in relation to the insulation adapter (110) in the at least one axial direction.

3. A leadthrough kit (100) according to claim 2, wherein:
- the first and second duct (120, 130) each comprise a number of fastening parts (124) arranged outside the body (121, 133) of the duct and wherein
- at least one fastener (150) comprises a counterpart (152) of the fastener, arranged to connect with the fastening part (124),

4. A leadthrough kit (100) according to claim 3, wherein:
- the fastening parts (124) are protrusions extending from an otherwise essentially cylindrical duct and wherein
- the counterpart (152) of the fastening part is arranged to form an interlocking joint with the fastening part (124).

5. A leadthrough kit (100) according to claim 2, 3 or 4, wherein the fastener (150) is arranged to be installed around the first or second (120, 130) duct.

6. A leadthrough kit (100) according to any of the preceding claims, comprising
- a first end (114),
- a second end (115) at a distance from the first end (114), the distance defining the thickness of the insulation adapter (110), and
- a four-sided cowl (116) connecting the first and the second end (114, 115),
whereby the first and the second through hole (112, 113) run through the insulation adapter (110) so that the through holes (112, 113) are inclined in relation to at least one side of the cowl (116).

7. A leadthrough kit (100) according to claim 6, wherein the centre axes (126) of the first and second duct (120, 130) form an angle (α) in relation to the projection (117) of at least one side of the insulation adapter (110), the angle being of the order of 1 to 5 degrees, especially 2 to 4 degrees, such as about 2 degrees.

8. A leadthrough kit (100) according to any of the preceding claims, wherein the first and the second duct (120, 130) are ventilation ducts.

9. A method for producing a pass through for ventilation ducts in a receiving structure, the method comprising:
- providing a leadthrough kit (100) according to at least one of the preceding claims,
- adjusting the depth of the first and second duct (120, 130) in the insulation adapter (110) to correspond with the receiving structure and
- locking the depth of the first and second duct (120, 130) in the insulation adapter (110) by means of locking means.

10. A method according to claim 9, wherein:
- the receiving structure is a wall structure (200) comprising:
o an outer structure layer (210),
o an inner structure layer (230) and
o an insulation layer (220) between the outer structure layer (210) and the inner structure layer (230),
- the leadthrough kit (100) comprises an end flange (140) arranged to connect with the ends (122, 133) of the first and second duct (120, 130) and to connect the ends (122, 133) on the same level with each other and in which method
- adjusting the depth of the first and second duct (120, 130) in the insulation adapter (110) so that the distance between the end flange (140) and the insulation adapter (110) corresponds with the thickness of the outer structure layer (210).

11. A method according to claim 9 or 10, wherein the leadthrough kit (100) is one according to any of the preceding claims 6 to 8 and wherein the insulation adapter (110) is installed so that its inclination is towards the outer surface of the receiving structure (211, 231).

## Patentansprüche

1. Durchführungsbausatz (100), umfassend:
- einen ersten Kanal (120), der ein Ende (122) umfasst, der mit einem Anschlag (125) bereitgestellt ist,
- einen zweiten Kanal (130), der ein Ende (132) umfasst, das mit einem Anschlag (135) bereitgestellt ist,
- einen Isolierungsadapter (110), der thermisches Isolierungsmaterial umfasst und eine Form eines rechteckigen Prismas aufweist und Folgendes umfasst:
- ein erstes Durchgangsloch (112) zum Aufnehmen des ersten Kanals (120) und
- ein zweites Durchgangsloch (113) zum Aufnehmen des zweiten Kanals (130), parallel zum ersten Kanal (120),
wobei der erste und der zweite Kanal (120, 130) in Bezug auf den Isolierungsadapter (110) beweglich zusammengebaut werden können, um die Tiefe des ersten und zweiten Kanals (120, 130) in Bezug auf den Isolierungsadapter (110) einzustellen,
- Verriegelungsmittel zum Verriegeln der Tiefe des ersten und zweiten Kanals (120, 130) in Bezug auf den Isolierungsadapter (110) und
- einen Endflansch (140), der so angeordnet ist, dass er mit den Enden (122, 133) des ersten und zweiten Kanals (120, 130) verbunden wird und die Enden (122, 133) zueinander ausrichtet, wobei der Endflansch (140) eine erste Öffnung (142) zum Aufnehmen des ersten Kanals (120) und eine zweite Öffnung (143) zum Aufnehmen des zweiten Kanals (130) sowie eines Gegenstücks (144) des Anschlags in Verbindung mit beiden Öffnungen (142, 143) zum Verbinden mit dem entsprechenden Anschlag (125, 135) zum Verriegeln der axialen Position des ersten und zweiten Kanals (120, 130) in Bezug auf den Endflansch (140) in mindestens einer axialen Richtung umfasst.

2. Durchführungsbausatz (100) nach Anspruch 1, wobei der Durchführungsbausatz (100) mindestens ein Befestigungselement (150) als das Verriegelungsmittel umfasst, wobei das Befestigungselement so angeordnet ist, dass es mit dem ersten oder zweiten Kanal (120, 130) verbunden wird, um deren axiale Position in Bezug auf den Isolierungsadapter (110) in der mindestens einen axialen Richtung zu verriegeln.

3. Durchführungsbausatz (100) nach Anspruch 2, wobei:
- der erste und zweite Kanal (120, 130) jeweils eine Anzahl von Befestigungsteilen (124) umfassen, die außerhalb des Kanalkörpers (121, 133) angeordnet sind, und wobei
- mindestens ein Befestigungselement (150) ein Gegenstück (152) des Befestigungselements umfasst, das zur Verbindung mit dem Befestigungsteil (124) angeordnet ist.

4. Durchführungsbausatz (100) nach Anspruch 3, wobei:
- die Befestigungsteile (124) Vorsprünge sind, die sich von einem ansonsten im Wesentlichen zylindrischen Kanal erstrecken, und wobei
- das Gegenstück (152) des Befestigungsteils so angeordnet ist, dass es mit dem Befestigungsteil (124) eine formschlüssige Verbindung bildet.

5. Durchführungsbausatz (100) nach Anspruch 2, 3 oder 4, wobei das Befestigungselement (150) so angeordnet ist, dass es um den ersten oder zweiten (120, 130) Kanal herum installiert wird.

6. Durchführungsbausatz (100) nach einem der vorstehenden Ansprüche, umfassend
- ein erstes Ende (114),
- ein zweites Ende (115) in einem Abstand von dem ersten Ende (114), wobei der Abstand die Dicke des Isolierungsadapters (110) definiert, und
- eine vierseitige Haube (116), die das erste und das zweite Ende (114, 115) verbindet, wodurch das erste und das zweite Durchgangsloch (112, 113) durch den Isolierungsadapter (110) verlaufen, so dass die Durchgangslöcher (112, 113) in Bezug auf mindestens eine Seite der Haube (116) geneigt sind.

7. Durchführungsbausatz (100) nach Anspruch 6, wobei die Mittelachsen (126) des ersten und zweiten Kanals (120, 130) einen Winkel (α) in Bezug auf den Überstand (117) mindestens einer Seite des Isolierungsadapters (110) bilden, wobei der Winkel in der Größenordnung von 1 bis 5 Grad, insbesondere 2 bis 4 Gras, wie beispielsweise etwa 2 Grad vorliegt.

8. Durchführungsbausatz (100) nach einem der vorstehenden Ansprüche, wobei der erste und der zweite Kanal (120, 130) Lüftungskanäle sind.

9. Verfahren zum Herstellen einer Durchführung für Lüftungskanäle in einer Aufnahmekonstruktion, wobei das Verfahren Folgendes umfasst:
- Bereitstellen eines Durchführungsbausatzes (100) nach mindestens einem der vorstehenden Ansprüche,
- Einstellen der Tiefe des ersten und zweiten Kanals (120, 130) in dem Isolierungsadapter (110) entsprechend der Aufnahmekonstruktion und
- Verriegeln der Tiefe des ersten und zweiten Kanals (120, 130) in dem Isolierungsadapter (110) mittels Verriegelungsmitteln.

10. Verfahren nach Anspruch 9, wobei:
- die Aufnahmekonstruktion eine Wandkonstruktion (200) ist, umfassend:
- eine äußere Konstruktionsschicht (210),
- eine innere Konstruktionsschicht (230) und
- eine Isolierschicht (220) zwischen der äußeren Konstruktionsschicht (210) und der inneren Konstruktionsschicht (230),
- wobei der Durchführungsbausatz (100) einen Endflansch (140) umfasst, der so angeordnet ist, dass er mit den Enden (122, 133) des ersten und des zweiten Kanals (120, 130) verbunden wird und die Enden (122, 133) auf der gleichen Ebene miteinander verbindet, und wobei bei diesem Verfahren
- die Tiefe des ersten und des zweiten Kanals (120, 130) in dem Isolierungsadapter (110) so eingestellt wird, dass der Abstand zwischen dem Endflansch (140) und dem Isolierungsadapter (110) der Dicke der äußeren Konstruktionsschicht (210) entspricht.

11. Verfahren nach Anspruch 9 oder 10, wobei der Durchführungsbausatz (100) einer nach einem der vorstehenden Ansprüche 6 bis 8 ist und wobei der Isolierungsadapter (110) so installiert wird, dass seine Neigung zur Außenfläche der Aufnahmekonstruktion (211, 231) hin verläuft.

## Revendications

1. Kit de traversée (100), comprenant :
- un premier conduit (120), qui comprend une extrémité (122) dotée d'une butée (125)
- un second conduit (130) qui comprend une extrémité (132) dotée d'une butée (135),
- un adaptateur d'isolation (110) comprenant un matériau d'isolation thermique et présentant une forme de prisme rectangulaire, et comprenant :
- un premier trou traversant (112) pour recevoir le premier conduit (120), et
- un second trou traversant (113) pour recevoir le second conduit (130) parallèlement au premier conduit (120),
dans lequel les premier et second conduits (120, 130) peuvent être assemblés de manière mobile par rapport à l'adaptateur d'isolation (110) pour ajuster la profondeur des premier et second conduits (120, 130) par rapport à l'adaptateur d'isolation (110),
- des moyens de verrouillage pour verrouiller la profondeur des premier et second conduits (120), 130) par rapport à l'adaptateur d'isolation (110), et
- une bride d'extrémité (140) agencée pour se connecter aux extrémités (122, 130) des premier et second conduits (120, 130) pour aligner les extrémités (122, 133) l'une par rapport à l'autre, cette bride d'extrémité (140), comprenant une première ouverture (142) pour recevoir le premier conduit (120) et une seconde ouverture (143) pour recevoir le second conduit (130) ainsi qu'une contre-partie (144) de la butée en connexion avec les deux ouvertures (142, 143) pour se connecter à la butée correspondante (125, 135) en vue de verrouiller la position axiale des premier et second conduits (120, 130) par rapport à la bride d'extrémité (140) dans au moins une direction axiale.

2. Kit de traversée (100) selon la revendication 1, dans lequel le kit de traversée (100) comprend au moins un élément de fixation (150), constituant ledit moyen de verrouillage, l'élément de fixation étant agencé pour se connecter au premier ou au second conduit (120, 130) afin de verrouiller leur position axiale par rapport à l'adaptateur d'isolation (110) dans au moins une direction axiale.

3. Kit de traversée (100) selon la revendication 2, dans lequel :
- les premier et second conduits (120, 130) comprennent chacun un certain nombre de parties de fixation (124) agencées à l'extérieur du corps (121, 133) du conduit et dans lequel
- au moins une fixation (150) comprend une contrepartie (152) de la fixation, agencée pour se connecter à la partie de fixation (124).

4. Kit de traversée (100) selon la revendication 3, dans lequel :
- les parties de fixation (124) sont des projections s'étendant à partir d'un conduit par ailleurs essentiellement cylindrique, et dans lequel
- la contrepartie (152) de la partie de fixation est agencée pour former un joint de verrouillage mutuel avec la partie de fixation (124).

5. Kit de traversée (100) selon la revendication 2, 3 ou 4, dans lequel la fixation (150) est agencée pour être installée autour du premier ou second conduit (120, 130).

6. Kit de traversée (100) selon l'une quelconque des revendications précédentes, comprenant
- une première extrémité (114),
- une seconde extrémité (115) à distance de la première extrémité (114), la distance définissant l'épaisseur de l'adaptateur d'isolation (110), et
- un capot à quatre côtés (116) connectant la première et la seconde extrémité (114, 115), les premier et second trous traversants (112, 113) s'étendant ainsi à travers l'adaptateur d'isolation (110) de sorte que les trous traversants (112, 113) sont inclinés par rapport à au moins un côté du capot (116)

7. Kit de traversée (100) selon la revendication 6, dans lequel les axes centraux (126) des premier et second conduits (120, 130) forment un angle (α) par rapport à la projection (117) d'au moins un côté de l'adaptateur d'isolation (110), l'angle état de l'ordre de 1 à 5 degrés, particulièrement de 2 à 4 degrés, par exemple de 2 degrés.

8. Kit de traversée (100) selon l'une quelconque des revendications précédentes, dans lequel les premier et second conduits (120, 130) sont des conduits de ventilation.

9. Procédé de production d'une traversée pour des conduits de ventilation dans une structure de réception, le procédé comprenant :
- la fourniture d'un kit de traversée (100) selon au moins l'une des revendications précédentes,
- l'ajustement de la profondeur des premier et second conduits (120, 130) dans l'adaptateur d'isolation (110) pour correspondre à la structure de réception, et
- le verrouillage de la profondeur des premier et second conduits (120, 130) dans l'adaptateur d'isolation (110) par l'intermédiaire de moyens de verrouillage.

10. Procédé selon la revendication 9, dans lequel :
- la structure de réception est une structure murale (200) comprenant :
- une couche de structure externe (210),
- une couche de structure interne (230), et
- une couche d'isolation (220) entre la couche de structure externe (210) et la couche de structure interne (230),
- le kit de traversée (100) comprend une bride d'extrémité (140) agencée pour se connecter aux extrémités (122, 133) des premier et second conduits (120, 130) et pour connecter les extrémités (122, 133) au même niveau les unes avec les autres, et lequel procédé comprend
- l'ajustement de la profondeur des premier et second conduits (120, 130) dans l'adaptateur d'isolation (110) de sorte que la distance entre la bride d'extrémité (140) et l'adaptateur d'isolation (110) corresponde à l'épaisseur de la couche de structure externe (210).

11. Procédé selon la revendication 9 ou 10, dans lequel le kit de traversée (100) est un kit selon l'une quelconque des revendications 6 à 8, et dans lequel l'adaptateur d'isolation (110) est installé de sorte que son inclinaison soit vers la surface extérieure de la structure de réception (211, 231).
